# FASCICULE DE BREVET EUROPEEN

(11) **EP 1 187 730 B1**
(45) Date de publication et mention de la délivrance du brevet: **23.04.2003**
(21) Numéro de dépôt: 00943761.7
(22) Date de dépôt: 05.06.2000
(51) Int. Cl.: B60B 3/04

(54) **ROUE ACOUSTIQUEMENT AMORTISSANTE**
RAD MIT SCHALLDÄMPFUNG
ACOUSTICALLY ABSORBENT WHEEL

(30) Priorité: 08.06.1999 FR 9907305
(43) Date de publication de la demande: 20.03.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: VAXELAIRE, Alain, F-63540 Romagnat (FR); ALFF, Denis, F-63400 Chamalières (FR); RENARD, Etienne, F-63200 Riom (FR)
(74) Mandataire: Dequire, Philippe Jean-Marie Denis
(86) Numéro de dépôt international: EP0005094
(87) Numéro de publication internationale: WO00074957

(56) Documents cités:
- WO-A-98/02319
- WO-A-98/33666
- DE-A- 2 457 907
- US-A- 5 509 726
- PATENT ABSTRACTS OF JAPAN vol. 018, no. 383 (M-1640), 19 juillet 1994 (1994-07-19) & JP 06 106903 A (MAZDA MOTOR CORP), 19 avril 1994 (1994-04-19) cité dans la demande
- PATENT ABSTRACTS OF JAPAN vol. 016, no. 311 (M-1277), 8 juillet 1992 (1992-07-08) & JP 04 087803 A (MAZDA MOTOR CORP), 19 mars 1992 (1992-03-19) cité dans la demande

## Description

L'invention concerne une roue pour véhicule, et particulièrement une roue ayant des propriétés d'amortissement acoustique particulières.

Lorsqu'un véhicule se déplace sur une chaussée, son conducteur et ses passagers sont placés dans l'habitacle dans une ambiance très bruyante. Et c'est un souci constant des constructeurs automobiles que de limiter le plus possible le niveau sonore de leurs véhicules.

Les origines de ces bruits dans l'habitacle sont très variées. On peut citer les bruits dus au moteur, ou d'origine aérodynamique, ou liés aux pompes hydrauliques diverses ou les bruits de roulement des pneumatiques sur la chaussée.

Ces derniers ont pour origine les chocs subis en roulage par la bande de roulement des pneumatiques et qui sont transmis par voie solidienne à l'habitacle du véhicule. Ces bruits sont dans une gamme de fréquence très large, comprise entre 80 et 800 Hz avec notamment des pics vers 250 Hz. On appelle ces bruits le « bourdonnement de caisse » ou « bruit de roulement ».

Dans cette gamme de fréquence, on trouve en particulier un mode propre de vibration du tore d'air de la cavité interne des pneumatiques ainsi que quatre modes propres de vibration des roues usuelles.

De nombreuses recherches ont été entreprises pour essayer de limiter le bruit perçu dans l'habitacle des véhicules. A titre d'exemple, la demande de brevet JP 4-87803 propose d'introduire une paroi dans la cavité interne du pneumatique pour séparer en deux parties le tore d'air interne, modifier de façon substantielle ses modes de vibration en les déplaçant au-delà de 500 Hz et ainsi atténuer les pics du bourdonnement de caisse dans l'habitacle situés aux environs de 250 Hz.

Un autre mode d'action est décrit dans la demande JP 6-106903. Cette demande propose d'introduire dans la cavité interne du pneumatique un élément acoustiquement amortissant par exemple une mousse, pour atténuer les vibrations dues à la résonance du tore d'air.

Le document WO 98/02319 (correspondant au préambule des revendications 1 et 2) propose une roue de véhicule dans laquelle le nez de galbe du disque de roue est renforcé mécaniquement pour élever les fréquences de plusieurs des modes propres de vibration de ladite roue. Ce document indique qu'une telle roue permet d'atténuer les bruits de roulement perçus dans l'habitacle d'un véhicule.

Ces demandes n'ont encore fait l'objet à ce jour d'aucune réalisation industrielle, en conséquence, le problème d'atténuer efficacement le bruit perçu dans l'habitacle d'un véhicule est toujours posé avec insistance.

Dans ce qui suit, on entend par « profil » d'une roue, la géométrie d'une coupe de ladite roue dans tout plan axial de la roue.

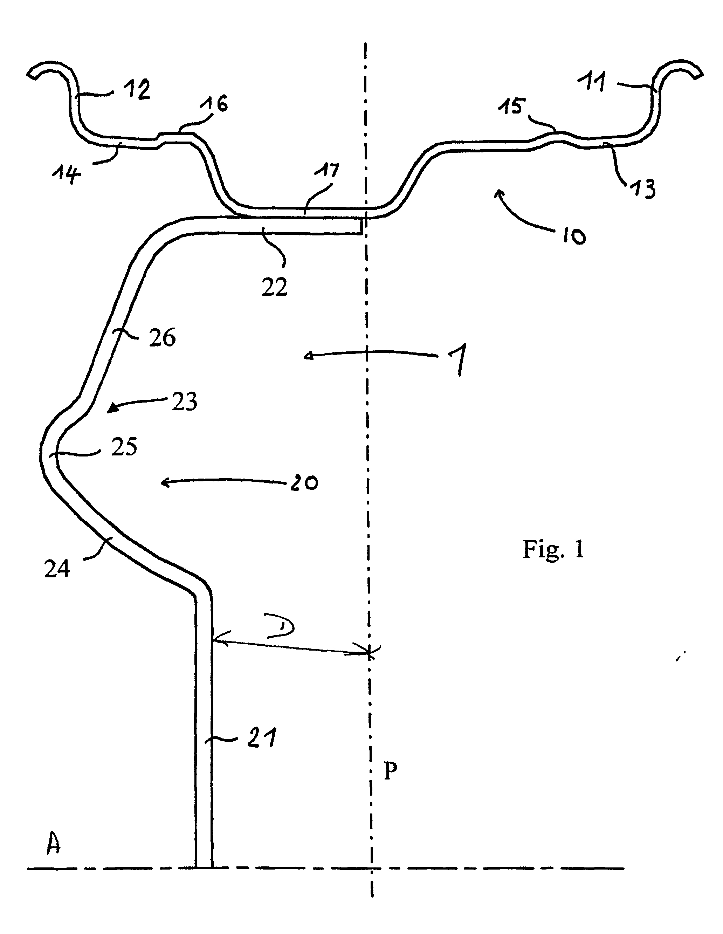

En définissant les orientations axiales « intérieure » et « extérieure » relativement au plan médian d'une roue, on entend par « nez de galbe » d'un disque de roue, la partie du disque, entre la zone d'attache au véhicule et la zone de liaison avec la jante, située axialement le plus à l'extérieur (voir figure 1). Lorsqu'une roue présente, en vue de côté et du côté extérieur, une continuité visuelle entre le disque et le crochet extérieur, on appelle une telle roue, une roue « full-face ». Une telle continuité visuelle peut être obtenue notamment en incluant dans le disque le crochet extérieur et en assemblant le disque et la jante au niveau de l'extrémité extérieure du siège extérieur. Une telle roue est présentée dans le brevet US 5 509 726. On peut aussi l'obtenir avec un disque comportant une zone intermédiaire, entre une zone de liaison du disque à la jante et une zone d'attache au véhicule, qui s'étend radialement sensiblement jusqu'à l'extrémité extérieure du siège extérieur de la jante.

L'invention a pour objet une roue de véhicule comprenant une jante et un disque, le disque présentant une zone centrale sensiblement annulaire d'attache du disque au véhicule, une zone de liaison du disque et de la jante ainsi qu'une zone intermédiaire. Cette roue est caractérisée en ce que la zone intermédiaire du disque comporte un secteur angulaire ou deux secteurs angulaires diamétralement opposés donnés rigidifiés en flexion axiale relativement à tout autre secteur angulaire de même angle au centre.

En conséquence, la rigidité de basculement de ladite roue relativement à un axe passant par la zone d'attache du disque au véhicule est maximale lorsque l'axe est orthogonal à l'axe central du ou des secteurs angulaires donnés.

Comme il sera expliqué plus avant, les roues selon l'invention, présentent un dédoublement en fréquence de l'un de leurs modes propres de vibration du disque et la fréquence de vibration moyenne de ces deux modes propres de vibration est supérieure à la fréquence du même mode propre d'une roue usuelle comparable.

La demanderesse a constaté qu'une telle roue présente des propriétés remarquables d'atténuation du bourdonnement de caisse perçu au niveau de l'habitacle d'un véhicule équipé de telles roues.

A titre d'exemple de réalisation, une roue selon l'invention présente, dans le ou les secteurs angulaires donnés et dans au moins une partie du profil du disque, une augmentation d'au moins une grandeur choisie dans le groupe de l'épaisseur du disque, de la distance axiale relativement au plan médian de la roue et de la distance radiale relativement à l'axe de rotation de la roue.

Lorsque la zone intermédiaire du disque de roue présente une zone d'ajours et un nez de galbe, on peut augmenter l'épaisseur, la position axiale ou/et la position radiale du nez de galbe dans le ou les secteurs angulaires donnés.

Ces augmentations peuvent être continues ou discontinues. Dans ce dernier cas, on peut prévoir, par exemple, des bossages localisés.

La zone intermédiaire d'une roue selon l'invention peut être rigidifiée localement par des nervures par exemple d'orientations radiales, par des renforts soudés ou par une diminution localisée de la surface de ses ajours.

La zone d'ajours peut aussi être rigidifiée localement au moyen d'ajours comportant des moyens de rigidification tels des bords rabattus.

Selon un autre mode de réalisation, dans ledit ou lesdits deux secteurs angulaires donnés, la liaison entre le disque et la jante est disposée sous le siège extérieur de la jante, la liaison étant disposée dans les autres secteurs sous la gorge de montage.

Selon une réalisation alternative, dans ledit ou lesdits deux secteurs angulaires donnés, la liaison entre le disque et la jante est disposée sous le crochet extérieur de la jante, la liaison étant disposée dans les autres secteurs sous la gorge de montage.

Plusieurs modes de réalisation de l'invention vont maintenant être présentés, à titre non limitatif, en s'appuyant sur les figures suivantes :
- la figure 1 représente une demi-coupe d'une roue de tourisme usuelle en tôle d'acier;
- la figure 2 présente une vue de face de la roue de la figure 1 ;
- la figure 3 présente la réponse vibratoire de deux roues à une excitation par choc, avec en (a) une roue usuelle et en (b) une roue selon l'invention ;
- la figure 4 illustre un mode de vibration usuel du disque de la roue des figures 1 et 2, avec en (a) une roue non déformée et en (b) la même roue avec une déformation amplifiée ;
- la figure 5 présente une vue de face d'une roue selon l'invention avec un nez de galbe ovale ;
- la figure 6 présente, en superposition, deux profils perpendiculaires des disques des roues des figures 1, 2, 5 et 7 ;
- la figure 7 présente une vue de face d'une autre roue selon l'invention avec un nez de galbe dont la position radiale présente un maximum en fonction de l'azimut ;
- la figure 8 présente, en vue similaire à la figure 6, deux profils perpendiculaires d'un disque dans lequel la distance axiale du galbe présente un ou deux maxima ;
- la figure 9 présente, en vue similaire à la figure 6, deux profils perpendiculaires d'un disque dans lequel les distances axiale et radiale du galbe présentent un ou deux maxima ;
- la figure 10 présente deux profils perpendiculaires d'un disque de roue full-face selon l'invention ;
- la figure 11 présente deux profils perpendiculaires d'un second disque de roue full-face selon l'invention;
- la figure 12 présente les résultats d'une analyse en bandes tiers d'octave d'un test véhicule de roues selon l'invention
- la figure 13 présente l'évolution en fonction de l'azimut de la raideur en flexion de deux roues selon l'invention ;
- la figure 14 présente, en vue de côté, une roue selon l'invention avec un emboîtage mixte, sous la gorge de montage et sous le siège extérieur ; et
- la figure 15 présente, en (a) un profil de roue classique et en (b) un profil de roue avec un ajour rigidifié.

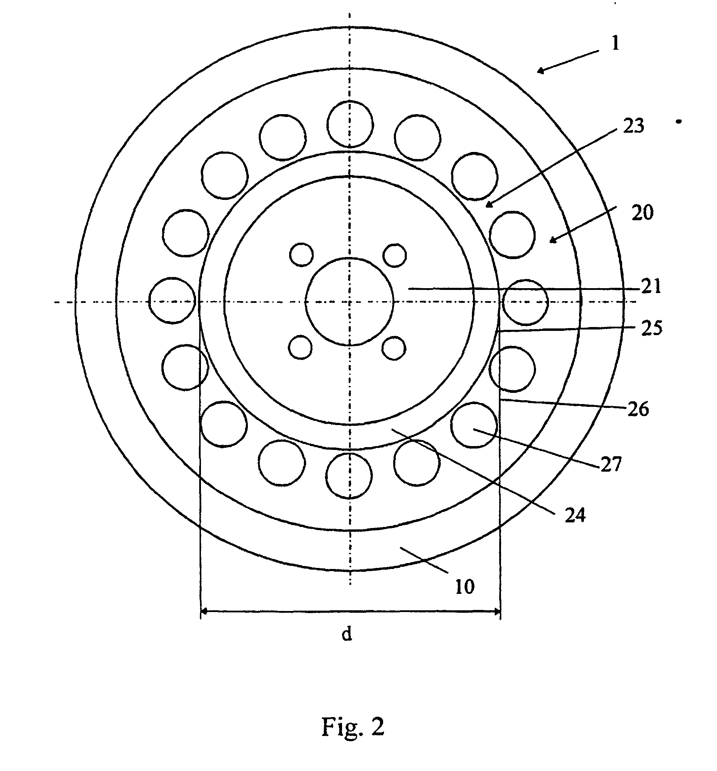

Aux figures 1 et 2 est représentée une roue 1 de référence « 5 1/2Jx14CHC-4-36-A » usuelle de véhicule de tourisme en tôle d'acier. Cette roue comprend une jante 10 et un disque 20. En prenant comme référence la position du disque 20 relativement au plan médian P de la roue 1, pour définir les côtés axialement extérieur et intérieur, la jante 10 présente deux crochets intérieur 11 et extérieur 12, deux sièges intérieur 13 et extérieur 14, deux bossages anti-décoincement ou « humps » intérieur 15 et extérieur 16 et un creux de jante 17.

Le disque 20 comprend une zone centrale d'attache au véhicule ou portée moyeu 21, une zone de liaison avec la jante ou zone d'emboîtage 22 et une zone intermédiaire 23. La zone d'attache au véhicule 21 est une zone sensiblement plane et circulaire. Elle comporte usuellement un trou central et les trous (non représentés) destinés à recevoir les vis de liaison avec le véhicule. La zone intermédiaire 23 comprend une cuvette de galbe 24, un nez de galbe 25 et une zone d'ajours 26 comportant une série d'ajours 27 (figure 2). Le nez de galbe 25 est la partie du disque axialement la plus extérieure. Le diamètre du nez de galbe est d.

Lorsqu'une telle roue est excitée mécaniquement, elle peut entrer en résonance selon plusieurs modes propres de vibration. La détermination de ces modes propres se fait en fixant la roue à un massif sismique par exemple, puis en l'excitant par un choc au moyen d'un marteau dynamométrique, en enregistrant l'accélération relative à cette excitation au moyen d'accéléromètres et en calculant la fonction de transfert *γ*/*F = f*(*v*) où γ est l'accélération mesurée en m/s², F la force du choc imposé en newton et *v* la fréquence de vibration en hertz.

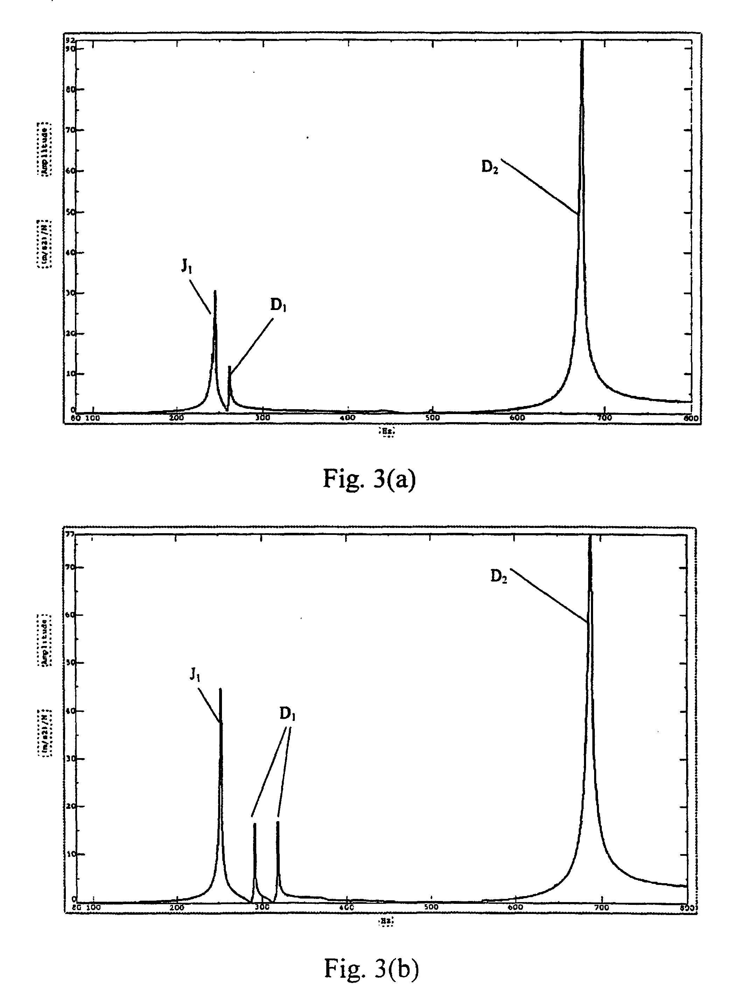

La figure 3(a) présente une telle courbe *γ*/*F = f*(*v*) pour la roue des figures 1 et 2. Sur cette courbe, on note la présence de trois pics dans la gamme 80-800 Hz. Ces pics correspondent à trois modes propres de vibration usuels de la roue dans cette gamme de fréquences.

Il y a deux modes propres de disque, ainsi appelés parce que c'est principalement le disque 20 qui se déforme, D₁ et D₂. On observe aussi le premier mode de jante J₁.

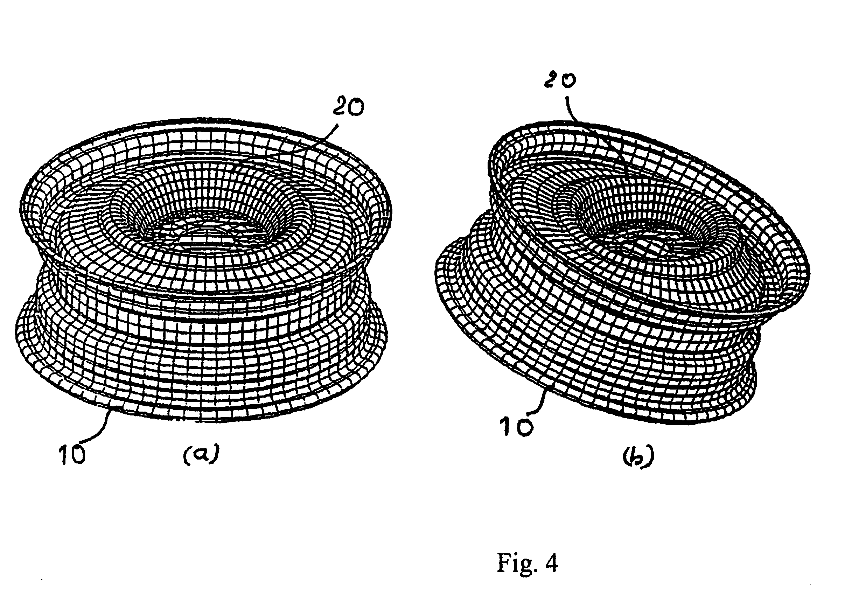

Le premier mode propre de disque D₁ est appelé mode de basculement du disque. Il correspond au deuxième pic de la figure 3 situé vers 270 Hz. Ce mode propre est illustré sur la figure 4. Cette figure montre en perspective : en (a) la roue non déformée et en (b) la roue avec une déformation fortement amplifiée correspondant au mode propre. Ce mode propre est en fait double, le basculement a lieu selon deux axes de basculement orthogonaux avec une même fréquence et en opposition de phase.

Ce premier mode propre du disque correspond à un basculement de l'ensemble de la jante 10 autour d'un axe compris dans le plan de portée moyeu 21 du disque 20.

Le second mode propre de disque appelé mode de pompage se situe vers 670 Hz.

Dans l'autre mode propre, c'est principalement la jante qui se déforme. On l'appelle mode de jante. Il se situe vers 240 Hz.

Le test d'analyse du bourdonnement de caisse sur véhicule est réalisé en plaçant un mannequin équipé de microphones dans l'habitacle d'un véhicule. Les signaux de sortie des microphones sont enregistrés et analysés en puissance acoustique, globalement et en bandes tiers d'octave. Les résultats d'un test sont présentés par la variation des puissances acoustiques de la solution testée relativement aux puissances acoustiques d'une référence.

Dans ce qui suit, on s'intéressera particulièrement au mode de basculement du disque de roue D₁.

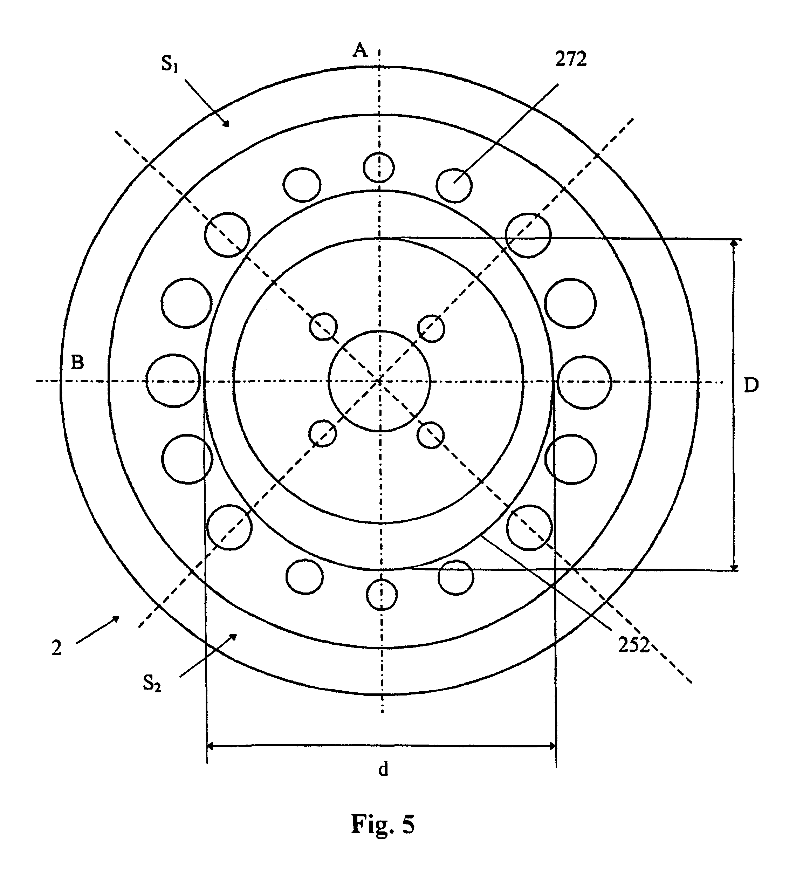

La figure 5 présente une roue 2 selon l'invention. Cette roue 2 comprend un disque dont le nez de galbe 252 est ovale. La position radiale du nez de galbe varie avec l'azimut et présente deux maxima diamétralement opposés selon l'axe A et deux minima diamétralement opposés selon l'axe B. Les deux axes A et B sont orthogonaux. Les deux secteurs S₁ et S₂ ont comme axe central l'axe A. Le diamètre maximal du nez de galbe dans la direction A est D, le diamètre minimal dans la direction B est d. En conséquence, dans tous secteurs angulaires diamétralement opposés S₁ et S₂ d'axe central A, quel que soit leur angle au centre, la hauteur radiale du nez de galbe 252 est substantiellement supérieure à celle observée dans le reste du disque de la roue 2 ainsi qu'à celle d/2 de la roue usuelle 1 correspondante.

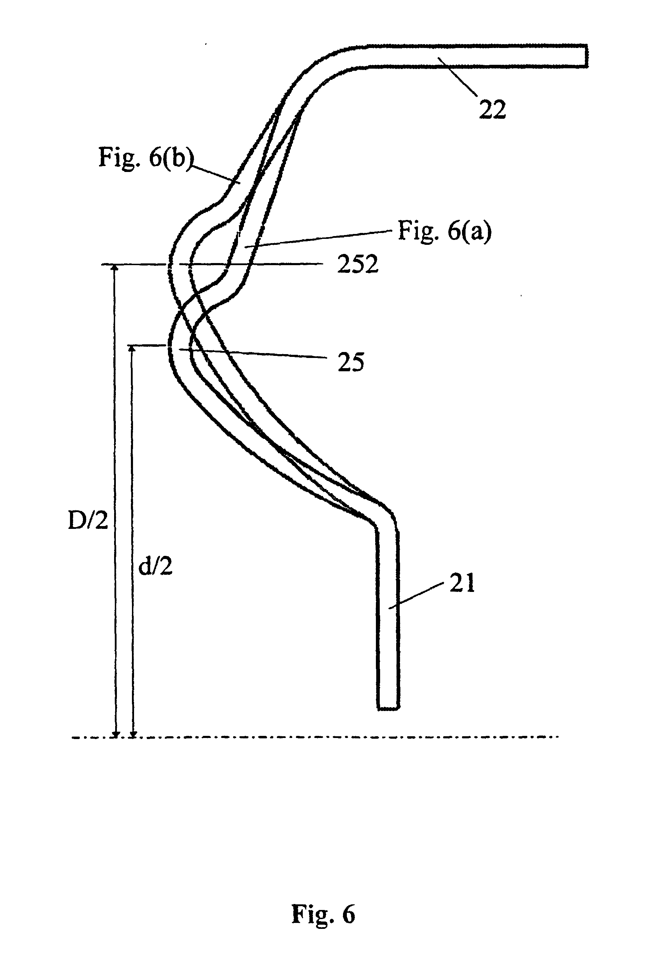

La figure 6 illustre cette variation de distance radiale du nez de galbe 252 en fonction de l'azimut. La figure 6(a) présente le profil du disque de la roue 1, quel que soit son azimut (à l'exception des ajours non représentés). Ce profil correspond aussi à celui du disque de la roue 2 dans un plan axial passant par l'axe B. La figure 6(b) présente le profil du disque de la roue 2 dans un plan axial passant par l'axe A.

La forme ovale du nez de galbe 252 entraîne aussi une modification correspondante de la zone d'ajours et de la cuvette de galbe du disque. En particulier, le diamètre des ajours 272 est de plus en plus petit lorsqu'ils se rapprochent de l'axe A (figure 5).

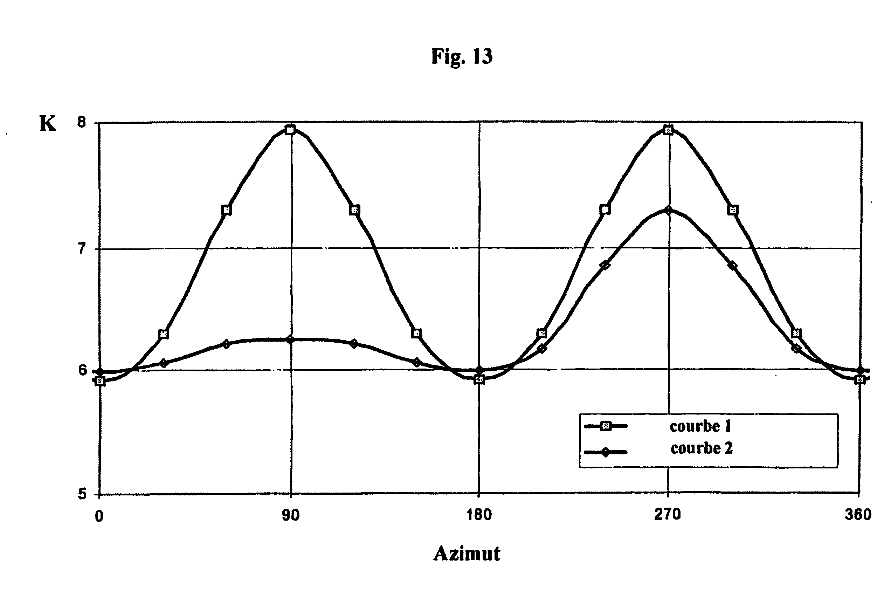

L'augmentation de la distance radiale du nez de galbe relativement à l'axe de la roue 2 entraîne une augmentation de la rigidité du disque. La figure 13 présente à la courbe 1 une variation de la raideur en flexion axiale K en fonction de l'azimut de la roue de la figure 5. Cette raideur en flexion axiale K est mesurée en fixant rigidement à plat la portée moyeu de la roue à un massif rigide. On applique ensuite une charge localisée successivement à un ensemble de points du crochet de jante régulièrement répartis sur la circonférence et pour chaque point, on mesure le déplacement axial résultant. L'évolution de raideur d'une roue en flexion axiale K peut aussi être déterminée par des moyens numériques de simulation par éléments finis, par exemple.

La figure 13 montre clairement l'existence de deux pics diamétralement opposés de cette raideur en flexion axiale correspondant directement à la variation de position du nez de galbe.

En conséquence, la rigidité de basculement du disque et de la jante relativement à un axe de rotation situé au niveau de la portée moyeu 21 est maximale lorsque cet axe de rotation est orienté selon la direction B orthogonale à la direction A.

Cette variation de rigidité de basculement de la roue définit les deux directions orthogonales A et B comme correspondant aux mouvements de basculement du premier mode propre de disque de la roue effectivement observés lors de la mise en résonance de la roue. Le premier mode propre de résonance du disque est alors dédoublé avec deux fréquences différentes au lieu d'une seule lors de la mise en résonance d'une roue usuelle telle 1.

C'est ce que l'on observe à la figure 3(b), le mode propre de basculement du disque D₁ est dédoublé en deux pics proches de fréquences 290 et 315 Hz au lieu de 270 précédemment. Les autres modes propres ne sont pas substantiellement modifiés.

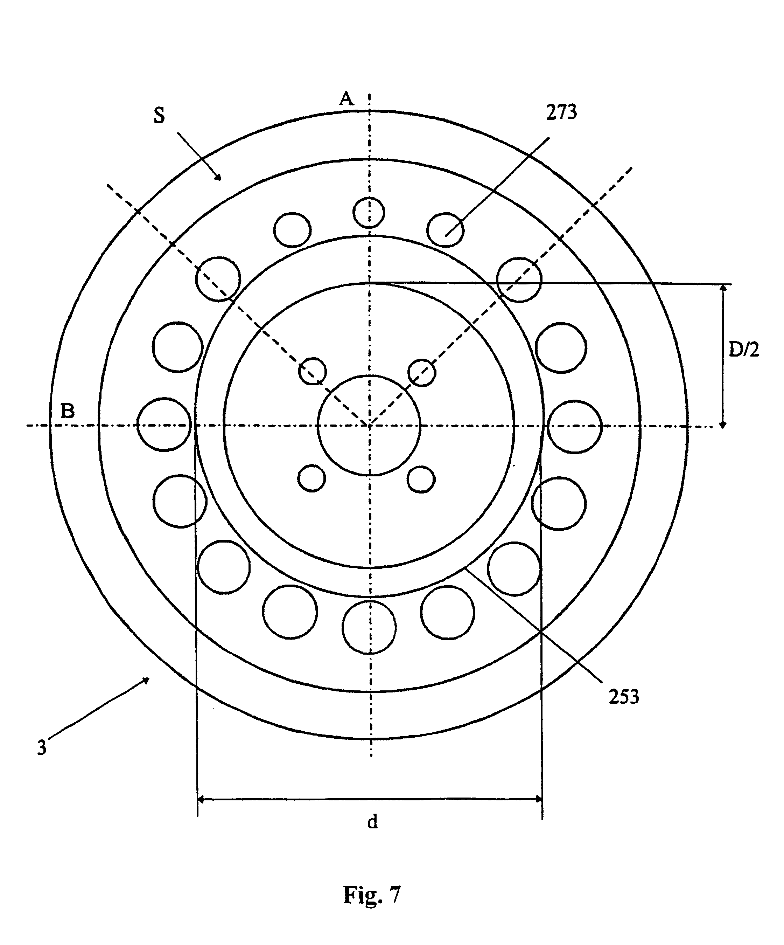

La figure 7 présente un second mode de réalisation d'une roue selon l'invention. Comme précédemment, la position radiale du nez de galbe 253 de cette roue 3 varie avec l'azimut mais ne présente qu'un seul maximum dans la direction de l'axe A. La forme de ce nez de galbe associe donc un demi cercle et un demi ovale. Comme dans le cas du disque de la roue 2, la variation de distance radiale du nez de galbe entraîne une rigidification du disque telle que la rigidité de basculement du disque et de la jante relativement à un axe de rotation situé au niveau de la portée moyeu 21 est maximale lorsque cet axe de rotation est orienté selon la direction B, orthogonale à la direction A.

La figure 13 présente dans sa courbe 2 l'évolution de la raideur de flexion axiale de cette roue en fonction de l'azimut. Très logiquement, on constate un pic de raideur associé au pic de hauteur radiale du nez de galbe. On constate aussi, à 180 degrés, l'existence d'un second pic d'amplitude notablement plus faible.

Le profil du disque de la roue 3 dans un plan axial passant par A du côté du maximum de distance axiale du nez de galbe D/2 correspond à celui de la figure 6(b) et du côté opposé au profil de la figure 6(a).

Ces deux premiers modes de réalisation d'une roue selon l'invention présentent une variation continue d'une première grandeur caractéristique du profil du disque de la roue : la position radiale du nez de galbe.

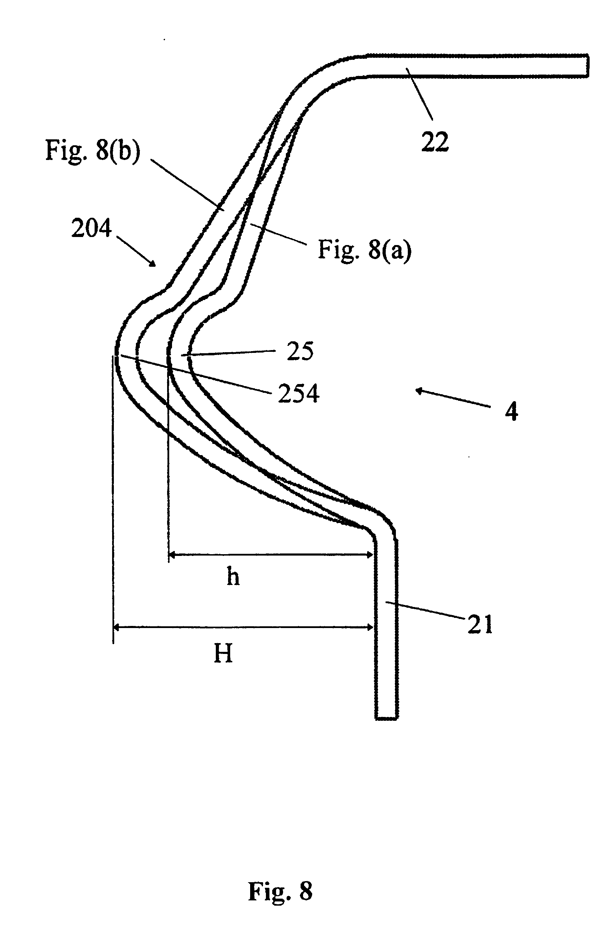

Un autre mode de réalisation d'un disque de roue selon l'invention est présenté à la figure 8. Cette figure est similaire à la figure 6 et présente deux profils orthogonaux du disque 204 de la roue 4. Le disque 204 de cette roue a la position axiale de son nez de galbe 254 qui varie en fonction de l'azimut. La distance axiale entre le plan de la portée moyeu 21 et l'extrémité axiale du nez de galbe 254 varie entre h et H. La valeur H est associée à un diamètre orienté selon un axe A et la valeur h au diamètre orienté selon un axe B. Comme précédemment A et B sont orthogonaux et correspondent aux deux directions privilégiées du premier mode propre de résonance du disque. Cette variation de distance axiale du nez de galbe relativement au plan médian de la roue peut très aisément être limitée à un bossage localisé.

Le disque 254 peut présenter deux maxima de distance axiale du nez de galbe ou un seul.

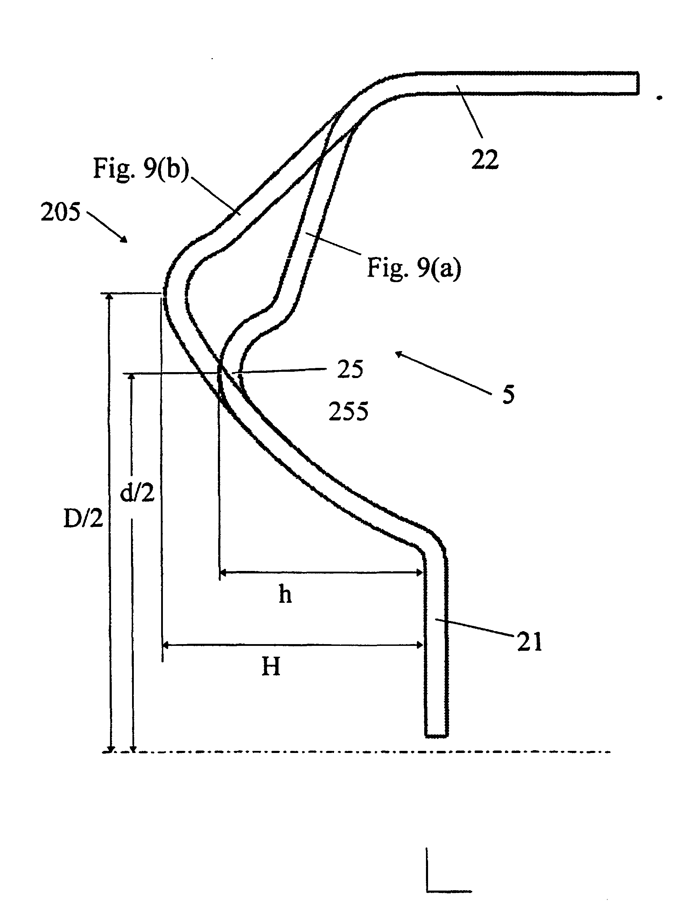

La figure 9 présente deux profils perpendiculaires selon les axes A et B d'un autre disque 205 d'une roue 5 selon l'invention. Le nez de galbe 255 de ce disque 205 a une double variation de profil en fonction de l'azimut. Dans la direction de l'axe A, la distance radiale relativement à l'axe de la roue est maximale D/2, ainsi que la distance axiale relativement à la portée moyeu 21 H. Dans la direction de l'axe B, la distance radiale relativement à l'axe de la roue est minimale d/2, et la distance axiale relativement à la portée moyeu 21 h. Les deux variations axiales et radiales de la position du nez de galbe sont ainsi en phase. La variation axiale peut être localisée ou continue.

Cette roue présente aussi une variation de rigidité de basculement plus importante en fonction de l'azimut. L'amplitude de l'écart entre les deux fréquences de vibration du mode propre de basculement du disque est nettement augmentée. Ce décalage s'effectue principalement vers les hautes fréquences. On constate ainsi qu'en conservant substantiellement la même masse de la roue, on peut augmenter la rigidité de la roue.

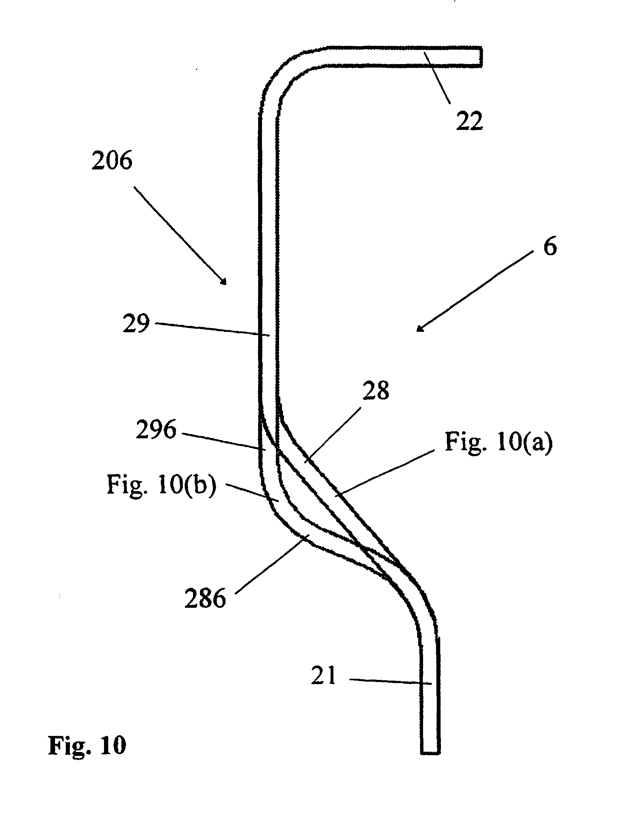

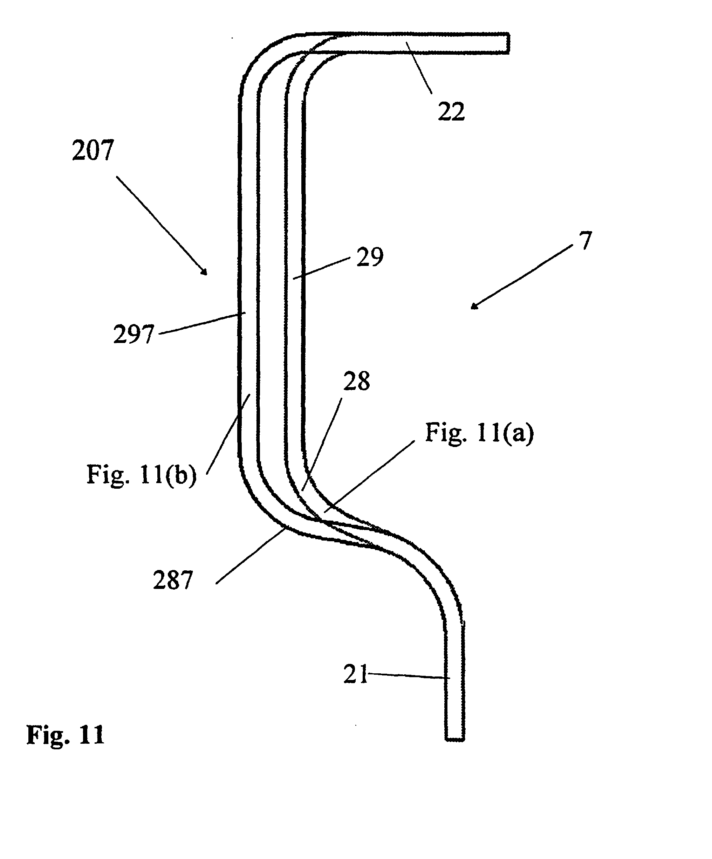

Les figures 10 et 11 présentent deux autres modes de réalisation d'un disque de roue selon l'invention correspondant à des roues full face. Comme précédemment, ces figures correspondent à la superposition de deux profils du disque pour faire ressortir les évolutions maximales dans les directions orthogonales A et B.

Le disque 206 est un disque pour roue full face. La zone intermédiaire de ce disque comprend un galbe 29 d'orientation sensiblement radiale et une cuvette 28 (figure 10(a)). Dans la direction perpendiculaire selon A (figure 10(b)), on constate que la cuvette est beaucoup plus inclinée axialement ce qui allonge et ovalise le galbe 296.

L'exemple de la figure 11, correspond à une augmentation de la distance axiale du galbe 297 dans la direction A (figure 11(b)) relativement au galbe 29 classique illustré à la figure 11(a). Bien entendu, la cuvette 287 est adaptée.

Les exemples présentées aux figures précédentes correspondent à des variations continues d'un ou de plusieurs paramètres géométriques de la zone intermédiaire des disques de roues destinées à introduire de fortes variations de rigidité selon l'azimut. Ces variations peuvent être aussi discontinues et obtenues par des bossages localisés. Parmi les paramètres utilisables, se trouve aussi l'épaisseur du disque. On peut ainsi par exemple augmenter l'épaisseur du nez de galbe dans un secteur angulaire donné pour obtenir une définition précise des deux axes A et B.

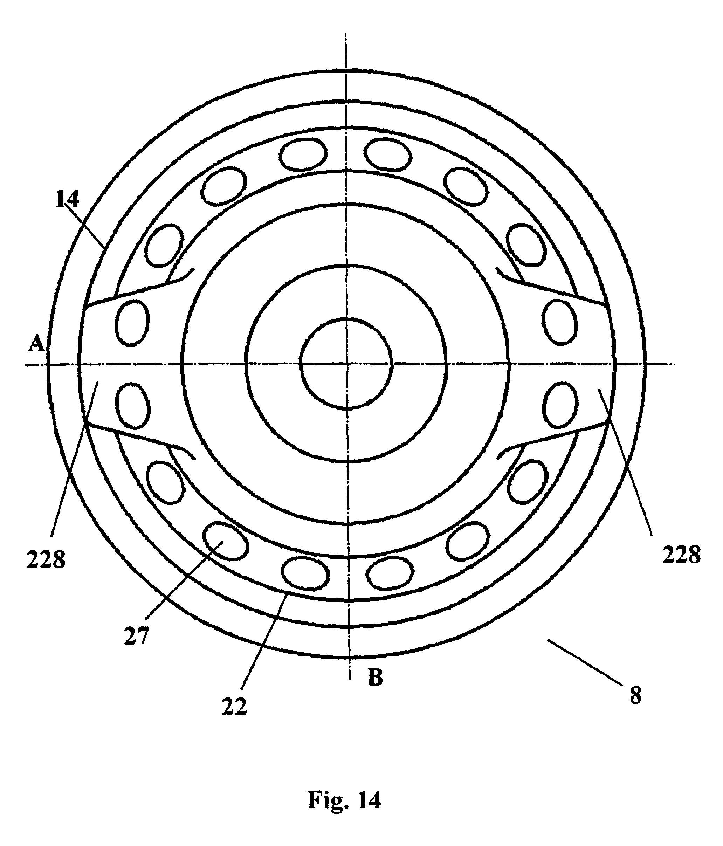

La figure 14 présente un autre mode de réalisation d'une roue 8 selon l'invention. Cette roue 8 a un emboîtage du disque classique sous le creux de gorge 17 de la jante 10 dans la plus grande partie de sa circonférence. Mais elle a aussi deux bras 228 qui sont directement soudés sous le siège extérieur 14 de la jante 10. Ces deux bras 228 sont disposés à 180° l'un de l'autre, selon un axe A et augmentent comme précédemment très sensiblement la raideur de flexion axiale dans la direction A, c'est-à-dire lors d'une flexion autour de l'axe B.

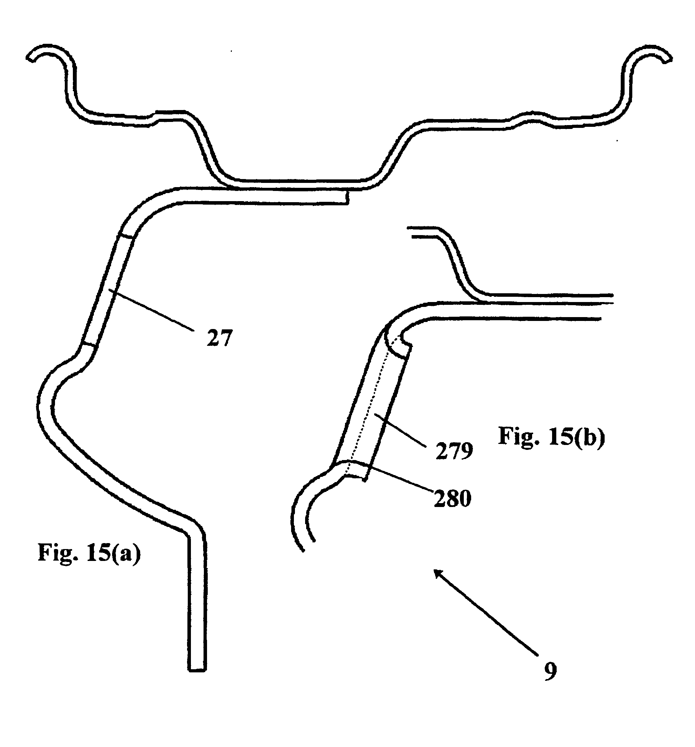

La figure 15(a) présente en coupe axiale une coupe d'une roue 9 selon l'invention avec un ajour 27. Cette coupe est similaire à celle d'une roue classique. La roue 9 comprend un ajour 279 dont les bords 280 ont été rabattus vers l'intérieur par une opération mécanique complémentaire. Cet ajour est visible à la figure 15(b). Le bord incurvé 280 augmente sensiblement la rigidité de flexion du disque selon l'azimut correspondant. C'est un autre mode de réalisation d'une roue selon l'invention.

Les disques selon l'invention peuvent être aisément réalisés en utilisant les modes opératoires classiquement utilisés dans la fabrication des disques de roues : par emboutissage, ou estampage avec des outils adaptés, on peut obtenir les disques avec un nez de galbe ovalisé ou avec des variations de positions axiales, ou encore des ajours de dimensions variées. Une variation d'épaisseur localisée peut être obtenue en rapportant des pièces complémentaires.

Les modes propres de vibration d'une roue peuvent être déterminés expérimentalement comme on l'a déjà vu. On peut aussi les obtenir par des calculs par éléments finis.

Le tableau 1 présente les résultats de tels calculs pour différentes roues de référence et selon l'invention. Ces roues sont modélisés sans tenir compte des ajours, les résultats sont donc décalés relativement aux essais réels.

La troisième colonne du tableau 1 donne les deux fréquences de vibration du premier mode propre de disque et la quatrième le décalage de la fréquence moyenne relativement à la roue de référence.

**Tableau 1**

| **Référence** | **Caractéristiques** | **Fréquences du premier mode propre de disque D**_{**1**} **(Hz)** | | **Δ fréquence moyenne** |
|---|---|---|---|---|
| 1 | roue en tôle d'acier de référence (fig. 1 et 2) | 310 | 310 | - |
| 2 | roue avec un nez de galbe ovale (fig. 5) (D-d = 30 mm) | 297 | 351 | 14 |
| 3 | roue avec un nez de galbe avec une distance radiale à un maximum et une variation continue (fig. 7) | 304 | 332 | 8 |
| 4 | roue avec un nez de galbe comportant une bosse (augmentation localisée de la distance axiale / plan médian P) (fig. 8) (H-h = 5 mm) | 308 | 338 | 13 |
| 5 | roue avec un nez de galbe ovale et en plus une bosse disposée selon l'axe A (fig. 9) | 295 | 369 | 22 |
| 5a | roue avec un nez de galbe ovale et en plus une bosse disposés selon l'axe B | 320 | 358 | 29 |
| 6 | roue full face usuelle fig. 10(a) | 232 | 232 | - |
| 7 | roue full face avec cuvette ovalisée (fig. 10(b)) | 242 | 290 | 34 |
| 8 | roue full face avec une bosse localisée | 235 | 255 | 13 |

Les résultats montrent que la rigidification localisée du disque de roue entraîne bien un dédoublement des fréquences de vibration du premier mode propre du disque D₁. L'amplitude de ce dédoublement est fonction de l'amplitude des variations géométriques des disques et de la forme de ceux-ci.

L'amplitude des variations est particulièrement notable pour les roues full face, tout en gardant sensiblement les mêmes amplitudes de variation des paramètres géométriques en fonction de l'azimut.

Ces résultats sont confirmés par les résultats du test présentés à la figure 3(b). Ce test a été réalisé avec une roue dont deux secteurs d'une vingtaine de degrés, diamétralement opposés, ont été rigidifiés par doublement de l'épaisseur du nez de galbe (soudage de pièces de renfort). Les résultats présentés à la figure 3(b) montrent aussi un dédoublement de la fréquence du premier mode propre de vibration du disque : on passe de 270 Hz pour la roue de référence à 290 et 315 Hz pour la roue d'épaisseur de nez de galbe doublée.

Un test sur véhicule pour ces deux mêmes roues a été effectué pour déterminer si ce dédoublement de la fréquence de vibration du premier mode propre du disque D₁ pouvait avoir une incidence sur le bourdonnement de caisse perçu dans l'habitacle d'un véhicule. Le véhicule était une Mégane de Renault équipée de quatre roues identiques correspondant à la roue 1 de référence, puis à la roue d'épaisseur de nez de galbe doublée selon l'invention. Les pneumatiques étaient des Michelin MXT E, vitesse de l'essai : 80 km/h.

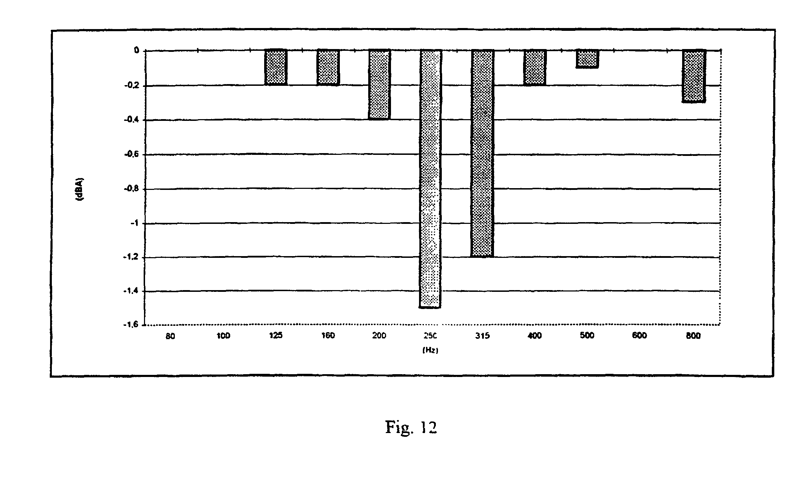

La figure 12 présente les résultats de l'analyse en bandes tiers d'octave du test sur véhicule précédent. Cette analyse donne l'écart mesuré de la solution 2 relativement aux roues de référence dans la gamme de fréquences 80-800 Hz.

On constate une diminution sensible du bourdonnement de caisse pouvant atteindre 1,5 dBA dans la bande centrée sur 250 Hz, bande où se situent des pics du bourdonnement de caisse.

Ce résultat montre que les roues selon l'invention permettent effectivement et de façon substantielle d'atténuer le bourdonnement de caisse perçu dans l'habitacle d'un véhicule.

## Revendications

1. Roue (3) de véhicule comprenant une jante (10) et un disque (20), le disque présentant une zone intermédiaire (23) entre une zone centrale (21) sensiblement annulaire d'attache du disque au véhicule et une zone de liaison (22) du disque et de la jante, la zone intermédiaire (23) dudit disque (20) comportant un secteur angulaire donné (5) rigidifié en flexion axiale relativement à d'autres secteurs angulaires, **caractérisée en ce que** ledit secteur angulaire (5) donné est rigidifié relativement à tout autre secteur angulaire de même angle au centre.

2. Roue (2) de véhicule comprenant une jante (10) et un disque (20), le disque présentant une zone intermédiaire (23) entre une zone centrale (21) sensiblement annulaire d'attache du disque au véhicule et une zone de liaison (22) du disque et de la jante, ladite zone intermédiaire (23) dudit disque (20) comportant deux secteurs angulaires (S₁, S₂) diamétralement opposés donnés rigidifiés en flexion axiale relativement à d'autres secteurs angulaires, **caractérisée en ce que** lesdits secteurs angulaires données (S₁, S₂) sont rigidifiés relativement à tout autre secteur angulaire de même angle au centre.

3. Roue selon l'une des revendications 1 ou 2, dans laquelle, dans ledit ou lesdits secteurs angulaires donnés, au moins une partie du profil dudit disque présente une augmentation d'au moins une grandeur choisie dans le groupe de l'épaisseur du disque, de la distance axiale relativement au plan médian de la roue et de la distance radiale relativement à l'axe de rotation de la roue.

4. Roue selon l'une des revendications 1 à 3, dans laquelle, ladite zone intermédiaire comprenant une zone d'ajours et un galbe avec un nez de galbe, l'épaisseur dudit nez de galbe est augmentée dans ledit ou lesdits secteurs angulaires donnés.

5. Roue selon l'une des revendications 1 à 4, dans laquelle, ladite zone intermédiaire comprenant une zone d'ajours et un galbe avec un nez de galbe, la position axiale dudit nez de galbe est augmentée dans ledit ou lesdits secteurs angulaires donnés.

6. Roue selon l'une des revendications 1 à 5, dans laquelle, ladite zone intermédiaire comprenant une zone d'ajours et un galbe avec un nez de galbe, la position radiale dudit nez de galbe est augmentée dans ledit ou lesdits secteurs angulaires donnés.

7. Roue selon l'une des revendications 1 à 6, dans laquelle, ladite zone intermédiaire comprenant notamment une zone d'ajours, la surface desdits ajours est minimale dans ledit ou lesdits secteurs angulaires donnés.

8. Roue selon l'une des revendications 1 à 7, dans laquelle, ladite zone intermédiaire comprenant notamment une zone d'ajours, les bords desdits ajours comportent dans ledit ou lesdits secteurs angulaires donnés des moyens de rigidification tels des bords rabattus.

9. Roue selon l'une des revendications 3 à 7, dans laquelle ladite augmentation est continue en fonction de l'azimut.

10. Roue selon l'une des revendications 3 à 7, dans laquelle ladite augmentation est obtenue par des bossages localisés.

11. Roue selon l'une des revendications 1 à 10, dans laquelle ladite zone intermédiaire comporte des nervures radiales.

12. Roue selon l'une des revendications 1 à 11, dans laquelle ladite zone intermédiaire comporte des renforts soudés.

13. Roue selon l'une des revendications 1 à 12, dans laquelle, dans ledit ou lesdits deux secteurs angulaires donnés, la liaison entre le disque et la jante est disposée sous le siège extérieur de ladite jante, ladite liaison étant disposée dans les autres secteurs sous la gorge de montage.

14. Roue selon les revendications 1 à 12, dans laquelle, dans ledit ou lesdits deux secteurs angulaires donnés, la liaison entre le disque et la jante est disposée sous le crochet extérieur de ladite jante, ladite liaison étant disposée dans les autres secteurs sous la gorge de montage.

## Claims

1. A vehicle wheel (3) comprising a rim (10) and a disc (20), the disc having an intermediate zone (23) between a central, substantially annular, zone (21) for attaching the disc to the vehicle and a zone (22) for connecting the disc to the rim, the intermediate zone (23) of said disc (20) comprising a given angular sector (S) which is stiffened in axial flexure relative to other angular sectors, **characterised in that** said given angular sector (S) is stiffened relative to any other angular sector of the same angle at the centre.

2. A vehicle wheel (2) comprising a rim (10) and a disc (20), the disc having an intermediate zone (23) between a central, substantially annular, zone (21) for attaching the disc to the vehicle and a zone (22) for connecting the disc to the rim, said intermediate zone (23) of said disc (20) comprising two given diametrically opposed angular sectors (S₁, S₂) which are stiffened in axial flexure relative to other angular sectors, **characterised in that** said given angular sectors (S₁, S₂) are stiffened relative to any other angular sector of the same angle at the centre.

3. A wheel according to one of Claims 1 or 2, in which, in said given angular sector(s), at least part of the profile of said disc has an increase in at least one variable selected from among the thickness of the disc, the axial distance relative to the mid-plane of the wheel and the radial distance relative to the axis of rotation of the tyre.

4. A wheel according to one of Claims 1 to 3, in which, said intermediate zone comprising a zone of cutouts and a curve with a curved nose, the thickness of the curved nose is increased within said given angular sector(s).

5. A wheel according to one of Claims 1 to 4, in which, said intermediate zone comprising a zone of cutouts and a curve with a curved nose, the axial position of said curved nose is increased within said given angular sector(s).

6. A wheel according to one of Claims 1 to 5, in which, said intermediate zone comprising a zone of cutouts and a curve with a curved nose, the radial position of said curved nose is increased within said given angular sector(s).

7. A wheel according to one of Claims 1 to 6, in which, said intermediate zone comprising in particular a zone of cutouts, the surface of said cutouts is minimal within said given angular sector(s).

8. A wheel according to one of Claims 1 to 7, in which, said intermediate zone comprising in particular a zone of cutouts, the edges of said cutouts comprise stiffening means such as folded-over edges within said given angular sector(s).

9. A wheel according to one of Claims 3 to 7, in which said increase is continuous as a function of the azimuth.

10. A wheel according to one of Claims 3 to 7, in which said increase is obtained by localised bosses.

11. A wheel according to one of Claims 1 to 10, in which said intermediate zone comprises radial ribs.

12. A wheel according to one of Claims 1 to 11, in which said intermediate zone comprises welded reinforcements.

13. A wheel according to one of Claims 1 to 12, in which, in said given (two) angular sector(s), the connection between the disc and the rim is located beneath the outer seat of the rim, said connection being located in the other sectors beneath the mounting groove.

14. A wheel according to Claims 1 to 12, in which, in said given (two) angular sector(s), the connection between the disc and the rim is located beneath the outer hook of the rim, said connection being located in the other sectors beneath the mounting groove.

## Patentansprüche

1. Fahrzeugrad (3), das eine Felge (10) und eine Scheibe (20) aufweist, wobei die Scheibe eine Zwischenzone (23) zwischen einer im wesentlichen kreisringförmigen, zentralen Zone (21) der Anbringung der Scheibe am Fahrzeug und einer Verbindungszone (22) der Scheibe und der Felge aufweist, und wobei die Zwischenzone (23) der genannten Scheibe (20) einen Winkelsektor (S) aufweist, der gegeben ist und in der axialen, federnden Biegsamkeit gegenüber anderen Winkelsektoren versteift ist, **dadurch gekennzeichnet, daß** der genannte, gegebene Winkelsektor (S) bezüglich jedem anderen Winkelsektor mit gleichem Winkel zur Mitte ausgesteift ist.

2. Fahrzeugrad (2), das eine Felge (10) und eine Scheibe (20) aufweist, wobei die Scheibe eine Zwischenzone (23) zwischen einer im wesentlichen kreisringförmigen, zentralen Zone (21) der Anbringung der Scheibe am Fahrzeug und einer Verbindungszone (22) der Scheibe und der Felge aufweist, und wobei die Zwischenzone (23) der genannten Scheibe (20) zwei Winkelsektoren (S₁, S₂) aufweist, die diametral gegenüberliegen, gegeben sind und in der axialen, federnden Biegsamkeit gegenüber anderen Winkelsektoren versteift sind, **dadurch gekennzeichnet, daß** die genannten, gegebenen Winkelsektoren (S₁, S₂) bezüglich jedem anderen Winkelsektor mit gleichem Winkel zur Mitte ausgesteift sind.

3. Rad nach einem der Ansprüche 1 oder 2, worin in dem oder den gegebenen Winkelsektor(en) mindestens ein Teil des Profils der genannten Scheibe eine Erhöhung mindestens einer Größe aufweist, die aus der Gruppe der Dicke der Scheibe, des axialen Abstands in Bezug auf die Mittelebene des Rades und des radialen Abstands in Bezug auf die Drehachse des Rades ausgewählt ist.

4. Rad nach einem der Ansprüche 1 bis 3, worin die genannte Zwischenzone eine Durchbruchzone und eine Kontur mit einer Konturnase aufweist, wobei die Dicke der genannten Konturnase in dem oder den genannten, gegebenen Winkelsektor(en) erhöht ist.

5. Rad nach einem der Ansprüche 1 bis 4, worin die genannte Zwischenzone eine Durchbruchzone und eine Kontur mit einer Konturnase aufweist und die axiale Lage der genannten Konturnase in dem oder den gegebenen Winkelsektor(en) erhöht ist.

6. Rad nach einem der Ansprüche 1 bis 5, worin die genannte Zwischenzone eine Durchbruchzone und eine Kontur mit einer Konturnase aufweist und die radiale Lage der genannten Konturnase in dem oder den gegebenen Winkelsektor(en) erhöht ist.

7. Rad nach einem der Ansprüche 1 bis 6, worin die genannte Zwischenzone besonders eine Durchbruchzone aufweist und die Oberfläche der genannten Durchbrüche in dem oder den genannten, gegebenen Winkelsektor(en) minimal ist.

8. Rad nach einem der Ansprüche 1 bis 7, worin die genannte Zwischenzone besonders eine Durchbruchzone aufweist und die Ränder der genannten Durchbrüche in dem oder den genannten, gegebenen Winkelsektoren Mittel zur Aussteifung solcher umgeschlagener Ränder aufweisen.

9. Rad nach einem der Ansprüche 3 bis 7, worin die genannte Erhöhung in einer Azimut-Funktion durchgehend ist.

10. Rad nach einem der Ansprüche 3 bis 7, worin die genannte Erhöhung durch örtliche Sickenbildungen erhalten ist.

11. Rad nach einem der Ansprüche 1 bis 10, worin die genannte Zwischenzone radiale Rippen aufweist.

12. Rad nach einem der Ansprüche 1 bis 11, worin die genannte Zwischenzone geschweißte Verstärkungen aufweist.

13. Rad nach einem der Ansprüche 1 bis 12, worin in dem oder den genannten, gegebenen Winkelsektor(en) die Verbindung zwischen der Scheibe und der Felge unter dem äußeren Sitz der genannten Felge angeordnet ist und die genannte Verbindung in den anderen Sektoren unter der Montage-Auskehlung angeordnet ist.

14. Rad nach einem der Ansprüche 1 bis 12, worin in dem oder den genannten, gegebenen Winkelsektor(en) die Verbindung zwischen der Scheibe und der Felge unter der äußeren Krempe der genannten Felge angeordnet ist, und die genannte Verbindung in den anderen Sektoren unter der Montage-Auskehlung angeordnet ist.
